(19) Europäisches Patentamt
European Patent Office
Office européen des brevets

(11) EP 0 686 954 B1

## (12) EUROPEAN PATENT SPECIFICATION

(45) Date of publication and mention
of the grant of the patent:
**29.12.1999   Bulletin 1999/52**

(51) Int Cl.⁶: **G09G 3/34**

(21) Application number: **95108530.7**

(22) Date of filing: **02.06.1995**

(54) **Non binary pulse width modulation method for spatial light modulator**

Nicht binäres Pulseweitenmodulationsverfahren für räumliche Lichtmodulatoren

Méthode de modulation non binaire par largeur d'impulsion pour les modulateurs spatiaux de lumière

(84) Designated Contracting States:
**DE FR GB IT NL**

(30) Priority: **02.06.1994  US 254388**

(43) Date of publication of application:
**13.12.1995   Bulletin 1995/50**

(73) Proprietor: **TEXAS INSTRUMENTS
INCORPORATED
Dallas Texas 75265 (US)**

(72) Inventor: **Doherty, Donald B.
Richardson, TX 75080 (US)**

(74) Representative:
**Schwepfinger, Karl-Heinz, Dipl.-Ing.
Prinz & Partner GbR
Manzingerweg 7
81241 München (DE)**

(56) References cited:
**WO-A-92/09065          WO-A-94/09473
US-A- 5 278 652**

• **PHILIP E. MARGOLIS: "Hutchinson Personal
Computer Dictionary, pages 50 and 425-426"
773040, HELICON PUBLISHING, GREAT
BRITAIN 1991**

**Description**

TECHNICAL FIELD OF THE INVENTION

This invention relates to spatial light modulators used for image display systems, and more particularly to loading spatial light modulators with image data.

BACKGROUND OF THE INVENTION

Video display systems based on spatial light modulators (SLMs) are increasingly being used as an alternative to display systems using cathode ray tubes (CRTs). SLM systems provide high resolution displays without the bulk and power consumption of CRT systems.

Digital micro-mirror devices (DMDs) are a type of SLM, and may be used for either direct-view or projection display applications. A DMD has an array of micro-mechanical pixel elements, each having a tiny mirror that is individually addressable by an electronic signal. Depending on the state of its addressing signal, each mirror element tilts so that it either does or does not reflect light to the image plane. Other SLMs operate on similar principles, with an array of pixel elements that may emit or reflect light simultaneously with other pixel elements, such that a complete image is generated by addressing pixel elements rather than by scanning a screen. Another example of an SLM is a liquid crystal display (LCD) having individually driven pixel elements. Typically, displaying each frame of pixel data is accomplished by loading memory cells so that pixel elements can be simultaneously addressed.

To achieve intermediate levels of illumination between white (on) and black (off), pulse-width modulation (PWM) techniques are used. The basic PWM scheme involves first determining the rate at which images are to be presented to the viewer. This establishes a frame rate and a corresponding frame period. For example, in a standard television system, images are transmitted at 30 frames per second, and each frame lasts for approximately 33.3 milliseconds. Then, the intensity resolution for each pixel element is established. In a simple example, and assuming n bits of resolution, the frame time is divided into $2^n-1$ equal time slices. For a 33.3 millisecond frame period and n-bit intensity values, the time slice is $33.3/2^n-1$ milliseconds.

Having established these times, for each pixel of each frame, pixel intensities are quantized, such that black is 0 time slices, the intensity level represented by the least significant bit (lsb) is 1 time slice, and maximum brightness is $2^n-1$ time slices. Each pixel's quantized intensity determines its on-time during a frame period. Thus, during a frame period, each pixel with a quantized value of more than 0 is on for the number of time slices that correspond to its intensity. The viewer's eye integrates the pixel brightness so that the image appears the same as if it were generated with analog levels of light.

For addressing SLMs, PWM calls for the data to be formatted into "bit-planes", each bit-plane corresponding to a bit weight of the intensity value. Thus, if intensity is represented by an n-bit value, each frame of data has n bit-planes. Each bit-plane has a 0 or 1 value for each pixel element. In the simple PWM example described in the preceding paragraphs, during a frame, each bit-plane is separately loaded and the pixel elements addressed according to their associated bit-plane values. For example, the bit-plane representing the lsb's of each pixel is displayed for 1 time slice, whereas the bit-plane representing the MSBs is displayed for $2^{n-1}$ time slices. Because a time slice is only 33.3/255 milliseconds, the SLM must be capable of loading the lsb bit-plane within that time. The time for loading the lsb bit-plane is the "peak data rate".

A high peak data rate puts high throughput demands on the design of SLMs. To minimize the peak data rate, modifications to the above-described loading scheme have been devised. These loading schemes are acceptable only to the extent that they minimize visual artifacts in the displayed image.

One such modification uses a specially configured SLM, whose pixel elements are grouped into reset groups that are separately loaded and addressed. This reduces the amount of data to be loaded during any one time, and permits the LSB data for each reset group to be displayed at a different time during the frame period. This configuration is described in EP0610665 assigned to Texas Instruments Incorporated.

SUMMARY OF THE INVENTION

In accordance with the invention a method of displaying frames of pixel data on a spatial light modulator (SLM) having individually addressable pixel elements, for a pulse width modulated display, as defined in claim 1 is provided. The invention is useful with any SLM whose data is allocated parts of the frame period according to bit-weight. However, the invention is especially useful for SLM's that use split loading, such as split-reset addressing, where the number of loads per frame increases with the number of reset groups, and thus imposes a minimum number of time slices per frame.

A technical advantage of the invention is that successfully implements data loading for SLMs having split loading configurations. The number of loads per frame may be increased with longer load periods than achieved with previous methods. Longer load periods ease design constraints for SLMs.

BRIEF DESCRIPTION OF THE DRAWINGS

Figures 1 and 2 are block diagrams of image display systems, each having an SLM that is addressed with a split-reset PWM data loading method in accordance with the invention.

Figure 3 illustrates the SLM of Figures 1 and 2, configured for split-reset addressing.

Figure 4 illustrates an example of displaying pixel data in accordance with the invention.

Figure 5 illustrates another example of displaying pixel data in accordance with the invention.

## DETAILED DESCRIPTION OF THE INVENTION

### Overview of SLM Display Systems Using PWM

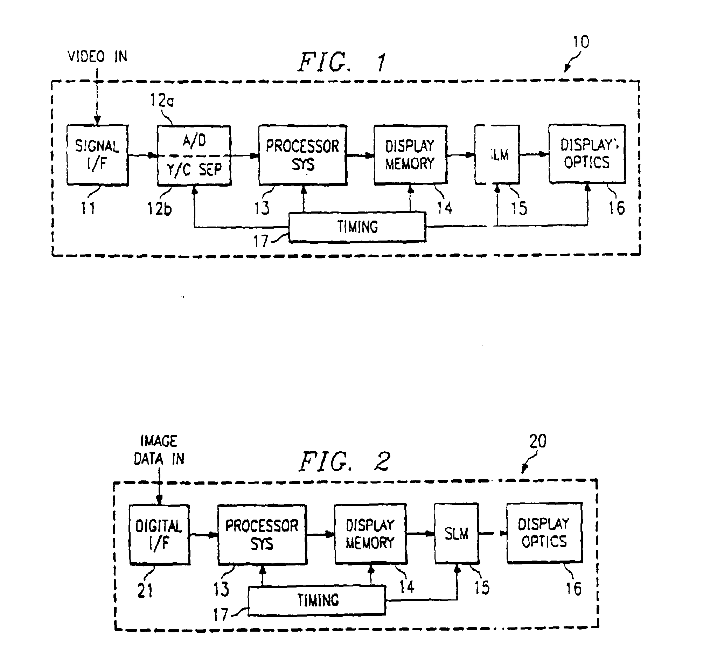

Comprehensive descriptions of DMD-based digital display systems are set out in U.S. Patent No. 5,079,544, entitled "Standard Independent Digitized Video System"; in EP0651577 entitled "Digital Television System"; and in EP0663770 entitled DMD Display System". Each of these patents and patent applications is assigned to Texas Instruments Incorporated. An overview of such systems is discussed below in connection with Figures 1 and 2.

Figure 1 is a block diagram of a projection display system 10, which uses an SLM 15 to generate real-time images from a analog video signal, such as a broadcast television signal. Figure 2 is a block diagram of a similar system 20, in which the input signal already represents digital data. In both Figures 1 and 2, only those components significant to main-screen pixel data processing are shown. Other components, such as might be used for processing synchronization and audio signals or secondary screen features, such as closed captioning, are not shown.

Signal interface unit 11 receives an analog video signal and separates video, synchronization, and audio signals. It delivers the video signal to A/D converter 12a and Y/C separator 12b, which convert the data into pixel-data samples and which separate the luminance ("Y") data from the chrominance ("C") data, respectively. In Figure 1, the signal is converted to digital data before Y/C separation, but in other embodiments, Y/C separation could be performed before A/D conversion, using analog filters.

Processor system 13 prepares the data for display, by performing various pixel data processing tasks. Processor system 13 includes whatever processing memory is useful for such tasks, such as field and line buffers. The tasks performed by processor system 13 may include linearisation (to compensate for gamma correction), colorspace conversion, and line generation. The order in which these tasks are performed may vary.

Display memory 14 receives processed pixel data from processor system 13. It formats the data, on input or on output, into "bit-plane" format, and delivers the bit-planes to SLM 16 one at a time. The bit-plane format permits each pixel element of SLM 15 to be turned on or off in response to the value of 1 bit of data at a time. In a typical display system 10 display memory 14 is a "double buffer" memory, which means that it has a capacity for at least two display frames. The buffer for one display frame can be read out to SLM 15 while the buffer another display frame is being written. The two buffers are controlled in a "ping-pong" manner so that data is continuously available to SLM 15.

As discussed in the Background, the data from display memory is delivered in bit-planes to SLM 15. Although this description is in terms of a DMD-type of SLM 15, other types of SLMs could be substituted into display system 10 and used for the invention described herein. For example, SLM 15 could be an LCD-type SLM. Details of a suitable SLM 15 are set out in U.S. Patent No. 4,956,619, entitled "Spatial Light Modulator", which is assigned to Texas Instruments Incorporated. Essentially, DMD 15 uses the data from display memory 14 to address its pixel elements. The "on" or "off" state of each pixel element in the array of DMD 15 forms an image.

U.S. Patent No. 5,278,652, entitled "DMD Architecture and Timing for Use in a Pulse-Width Modulated Display System", describes a method of formatting video data for use with a DMD-based display system and a method of addressing them for PWM displays. This patent application is assigned to Texas Instruments Incorporated. Some of the techniques discussed therein include clearing blocks of pixel elements, using extra "off" times to load data, and of breaking up the time in which the more significant bits are displayed into smaller segments. These techniques could be used for any SLM using PWM.

Display optics unit 16 has optical components for receiving the image from SLM 15 and for illuminating an image plane such as a display screen. For color displays, the bit-planes for each color could be sequenced and synchronized to a color wheel that is part of display optics unit 16. Or, the data for different colors could be concurrently displayed on three SLMs and combined by display optics unit 16. Master timing unit 17 provides various system control functions.

### Split Reset Addressing

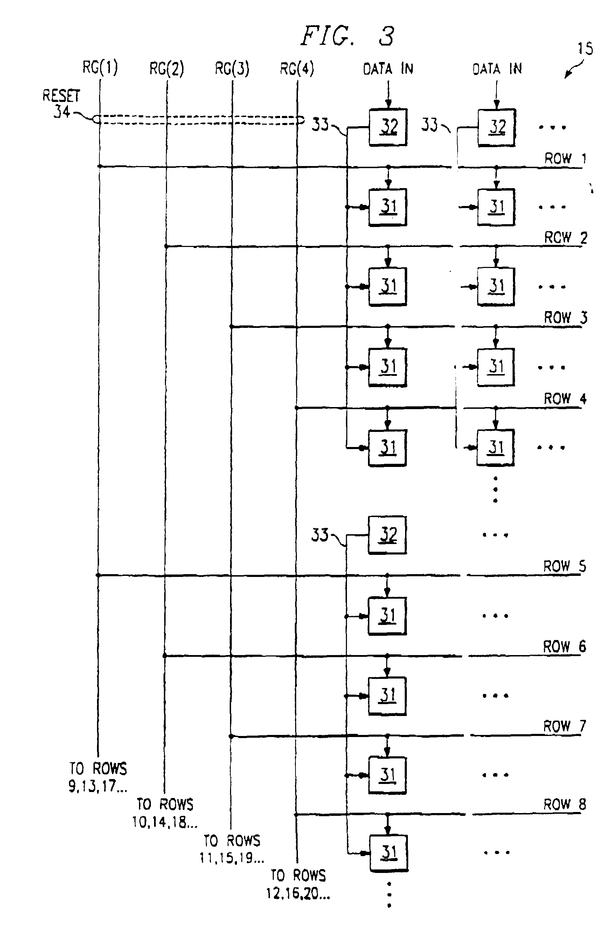

Figure 3 illustrates the pixel element array of SLM 15, configured for split-reset addressing. Only a small number of pixel elements 31 and their related memory cells 32 are explicitly shown, but as indicated, SLM 15 has additional rows and columns of pixel elements 31 and memory cells 32. A typical SLM 15 has hundreds or thousands of such pixel elements 31.

In the example of Figure 3, sets of four pixel elements 31 share a memory cell 32. As explained below, this divides SLM 15 into four reset groups of pixel elements 31. The data for these reset groups is formatted into reset group data. Thus, where $p$ is the number of pixels and $q$ is the number of reset groups, a bit-plane having $p$ number of bits is formatted into a reset group having p/q bits of data. The reset groups are divided "horizontally" in the sense that every fourth line of pixel elements 31 belongs to a different reset group.

EP0610665, entitled "Pixel Control Circuitry for Spatial Light Modulator", assigned to Texas Instruments Incorporated, describes split-reset data loading and addressing for a DMD. These concepts are applicable to SLMs in general.

Figure 3 illustrates how a single memory cell 32 serves multiple pixel elements 31. Pixel elements 31 are operated in a bistable mode. The switching of their states from on to off is controlled by loading their memory cells 32 with a bit of data and applying a voltage indicated by that bit to address electrodes connected to the pixel elements via address lines 33. Then, the state of the pixel element 31 is switched, in accordance with the voltage applied to each, by means of a reset signal via reset lines 34. In other words, for each set of four pixel elements 31, either 1 or a 0 data value is delivered to their memory cell 32, and applied to these pixel elements 31 as a "+" or "-" voltage. Signals on the reset lines 34 determine which pixel element 31 in that set will change state.

One aspect of split-reset addressing is that only a subset of the entire SLM array is loaded at one time. In other words, instead of loading an entire bit-plane of data at once, the loading for reset groups of that bit-plane's data occurs at different times within the frame period. A reset signal determines which pixel element 31 associated with a memory cell 32 will be turned on or off.

The pixel elements 31 are grouped into sets of four pixel elements 31, each from a different reset group. Each set is in communication with a memory cell 32. In the horizontal split reset example, pixel elements 32 from each of the first four lines, each belonging to a different reset group, share the same memory cell 32. The pixel elements 31 from each of the next four lines would also share memory cells 32. The number of pixel elements 31 associated with a single memory cell 32 is referred to as the "fanout" of that memory cell 32. The fanout could be some other number. A greater fanout results in the use of fewer memory cells 32 and a reduced amount of data loading within each reset period, but requires more resets per frame.

In each set of four pixel elements 31, four reset lines 34 control the times when the pixel elements 31 change state. Each pixel element 31 in this set is connected to a different reset line 33. This permits each pixel element 31 in a set to change its state at a different time from that of the other pixel elements 31 in that set. It also permits an entire reset group to be controlled by a common signal on its reset lines 34.

Once all memory cells 32 for the pixel elements 31 of a particular reset group have been loaded, the reset lines 34 provide a reset signal to cause the states of those pixel elements 31 to change in accordance with the data in their associated memory cells 32. In other words, the pixel elements 31 retain their current state as the data supplied to them changes, and until receiving a reset signal.

PWM addressing sequences for split-reset SLM's are devised in accordance with various heuristic rules. One rule is that the data for no more than one reset group can be loaded at the same time. In other words, the loading of different reset groups must not conflict. Other "optional" rules are described in EP0610665, assigned to Texas Instruments Incorporated.

## Non-Binary PWM

A feature of the invention is the recognition that PWM for SLMs need not follow binary constraints. In other words, for a system with a pixel resolution of n-bits per pixel, the number of time slices allocated for displaying bit-planes of varying bit-weights need not follow a $2^{n-1}$, $2^{n-2}$, ... $2^{n-n}$ pattern, as has been the case with conventional PWM methods. Instead, the number of time slices for the bit-planes can be determined by other system requirements. Also, the number of time slices per frame period is not necessarily $2^n-1$.

Pixel resolution is only one of several system requirements to be considered in determining allocation of time slices. Another system requirement to be considered is the split reset fanout. For purposes of example in this description, a fanout of 16 reset groups is assumed. Thus, as explained above, the data for each bit-plane is formatted so that it can be loaded in 16 different groups.

A third system requirement to be considered is the number of loads per frame. U.S. Patent No. 5,278,652, referred to above, and co-pending EP0685830, entitled "Pulse Width Modulation for Spatial Light Modulator with Split Reset Addressing", assigned to Texas Instruments Incorporated, both describe a method of dividing the display times of the bit-planes of the more significant bits into segments. The bit-planes selected for segmentation could be any one or more of the bit-planes other than that of the lsb. Typically, the segments are of equal duration, but this is not necessary. For each segmented bit-plane, the display of its segments is distributed throughout the frame period.

When the SLM has split-reset addressing, typically, each reset group is segmented in the same manner, and its segments displayed in the same basic pattern as those of the other reset groups.

The number of loads per frame is the number of segments plus the number of unsegmented bit-planes, times the number of reset groups. For example, if the 4 more significant bits of 8-bit pixel data are segmented into 8, 4, 2, and 1 segments, respectively, the number of loads per frame is (8+4+2+1+1+1+1+1) * 16 = 304.

The number of loads per frame cannot exceed the number of time slices per frame. Also, to permit the highest bit weight to represent half intensity, the number of loads must be encodable with the pixel resolution. Thus, for 8-bit pixel data, the segmentation scheme of the preceding paragraph cannot be accomplished if the conventional $2^n$-1 time slices per frame are used, because 304 is greater than $2^8$-1 = 255.

However, if the pixel resolution is increased to 9-bits, the segmentation scheme can be accomplished. Although the number of loads per frame increases by one load per reset group, or (8+4+2+1+1+1+1+1+1) $*$ 16 = 320, this number of loads is encodable with 9 bits. As explained below, the number of time slices per frame is derived from this number of loads, rather than by a $2^n$-1 constraint.

As indicated in the Background, a characteristic of PWM on SLM's is that display times are allocated in terms of "time slices" per frame period. Because the bit-plane representing the lsb is loaded and displayed during a single time slice, a time slice is often referred to as a "lsb period". The duration of a time slice, in units of time, is determined by dividing the frame period by the number of time slices. The "display lengths" referred to herein are in terms of the number of time slices allocated to a particular segment of a bit-plane or to an unsegmented bit-plane, and the "display times" are each a product of a number of time slices times the lsb period.

To determine the number of time slices per frame, and hence the duration of a lsb period, the minimum display length of each segment is determined. This minimum display length may be determined by dividing the number of loads per frame by the number of segments of the more significant bits, as follows:

$$\text{segment display length} = 320/8+4+2+1$$

$$= 21.33$$

The truncated result, 21, is the minimum number of "lsb periods" allocated to each segment. The segment length could be longer than the number of loads divided by the number of segments, but for purposes of example, herein, a segment display length of 21 lsb periods is assumed.

The display lengths of the 5 less significant bits can be allocated in any manner that represents 5 levels of intensity less than the segment display length. For optimum light efficiency, the total of the 5 display lengths of these less significant bits should equal the segment length minus one lsb period. In the example of this description, the 5 less significant bits are weighted between 0 and 20. One such weighting is 8, 5, 4, 2, and 1, which represent the lsb periods for bits 4-0, respectively.

The minimum number of lsb periods per frame can now be determined from the sum of all segment lengths and unsegmented bit-plane lengths. In the example herein:

$$N = (8*21)+(4*21)+(2*21)+21+8+5+4+2+1$$

$$= 335 \text{ lsb periods .}$$

The frame period can now be divided into time slices. Typically, for optimum light efficiency, the number of time slices is the same as the total display length, N lsb periods. Thus, in the example herein, for a frame period of T, each time slice is T/335. However, it is possible to add extra time slices per frame, for various purposes, such as the "off lsb periods" described in U.S. Patent No. 5,278,652. In any event, the total display length, here 335, is the minimum number of time slices per frame.

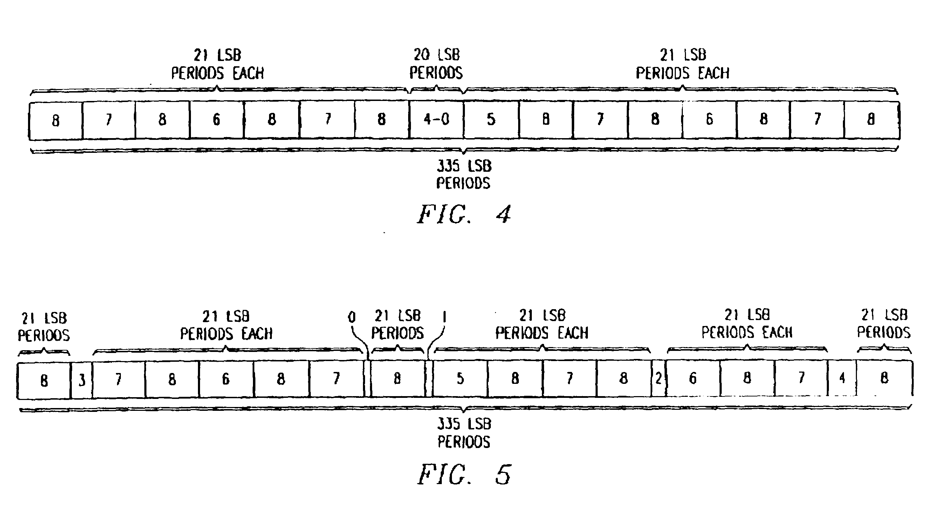

Figures 4 and 5 illustrate two examples of a method of displaying data for PWM on a split-reset SLM. This method includes the division of a frame period into time slices in accordance with the invention. As described above, the number of lsb periods is determined essentially by the number of loads per frame. In these examples, the number of time slices is the same as the number of lsb periods.

In Figure 4, the display lengths for the more significant bits (bits 5 - 7) are segmented and the segments are distributed throughout the frame period. The display lengths of the less significant bits (bits 0 - 4) are not segmented and are loaded and displayed during the middle of the frame period. Typically, each reset group is displayed in this same sequence, with the loading of each reset group being staggered by one time slice to avoid conflicts. The exception is the unsegmented display lengths (bits 0 - 4), whose loading sequence may vary among reset groups to avoid conflicts. However, this is not a requirement of the invention, and the loading sequence could vary from reset group to reset group.

Figure 5 illustrates a second example of a method of split-reset PWM addressing in accordance with the invention. As in Figure 4, for each reset group, segments and unsegmented display lengths are displayed for a predetermined number of time slices. However, the displaying of data for the less significant bits occurs throughout the frame period instead of being concentrated in mid-frame.

Other Embodiments

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the scope of the invention.

## Claims

1. A method of displaying frames of pixel data on a spatial light modulator, each frame of said pixel data being displayed in a frame period, said method comprising:

   formatting said pixel data into portions, each said portion corresponding to a bit-weight bit(i), where $n-1 \geq i \geq 0$, of the intensity value to be displayed between a least significant bit bit(0) and a most significant bit bit(n-1), which portions are represented by numbers corresponding to display lengths varying in a non-binary pattern; delivering said portions to said spatial light modulator; summing said numbers to obtain a total value representing a frame display length; dividing the frame period by at least said total value to obtain a number of equal time slices, setting the display time for the least value of intensity to be displayed, i.e. the least significant bit period, to the duration of a time slice so obtained; multiplying said time slice with the number corresponding to the display length of each said portion to determine the display time of each said portion as the product thereof; and displaying said portions of pixel data for each said display time.

2. The method of Claim 1, wherein the number of time slices is substantially the same as the number of least significant bit periods.

3. The method of Claim 1 or claim 2, wherein said portions are further allocated in terms of groups of pixel elements whose data is to be delivered to said spatial light modulator at a different time from other pixel elements but displayed during substantially the same frame period.

4. The method of Claims 1 to 3, wherein said n-bit pixel data comprises two groups consisting of more significant bits and less significant bits respectively, each bit of each group having respective bit-weights bit($i_m$), where $m=M...n-1$, and bit($i_l$), where $l=0...M-1$, and $n-1 \geq M > 0$, wherein each of the more significant bit-weights are segmented, such that each has more than one said portion, hereinafter referred to as a segment, the sum of the display lengths of each segment equalling that allocated to the portion according to the bit-weight; and wherein each of the less significant bit-weights remain unsegmented.

5. The method of Claims 1 to 4, wherein the minimum display length of at least some of said portions is determined by the number of times those portions are delivered to said spatial light modulator during one frame period, divided by the number of those portions.

6. The method of Claim 4, wherein said segments have substantially equal display lengths.

7. The method of Claims 4 and 5, wherein said less significant bit group has a total display length less than the display length of one of said segments.

8. The method of Claims 1 to 7, wherein said portions representing said less significant group are displayed throughout said frame period.

9. The method of Claims 1 to 7, wherein said portions representing said less significant group are displayed during the middle of said frame period.

## Patentansprüche

1. Verfahren zum Anzeigen von Bildern aus Pixeldaten auf einem räumlichen Lichtmodulator, wobei jedes Bild aus den Pixeldaten in einer Bildperiode angezeigt wird und bei dem Verfahren

   die Pixeldaten in Abschnitte formatiert werden, wobei jeder Abschnitt einer Bitgewichtung Bit (i) eines anzuzeigenden Intensitätswerts zwischen einem niedrigstwertigen Bit, Bit(0), und einem höchstwertigen Bit, Bit (n-1), entspricht, $n-1 \geq i \geq 0$ gilt und die Abschnitte durch Zahlen repräsentiert werden, die Anzeigedauern entsprechen, die in einem nichtbinären Muster variieren; die Abschnitte dem räumlichen Lichtmodulator zugeführt werden; die Zahlen aufsummiert werden, um einen Gesamtwert zu erhalten, der eine Bildanzeigedauer repräsentiert; die Bildperiode durch wenigstens den Gesamtwert geteilt wird, um eine Anzahl gleicher Zeitscheiben zu erhalten, die die Anzeigezeit für den geringsten anzuzeigenden Intensitätswert, d.h. die niedrigstwertige Bitperiode, auf die Dauer einer so erhaltenen Zeitscheibe einstellen; die Zeitscheibe mit der der Anzeigedauer jedes Abschnitts entsprechenden Zahl multipliziert wird, um die Anzeigezeit jedes Abschnitts als daraus resultierendes Produkt zu bestimmen; und die Abschnitte aus Pixeldaten für jede dieser Anzeigezeiten angezeigt werden.

2. Verfahren nach Anspruch 1, bei dem die Anzahl an Zeitscheiben im wesentlichen der Anzahl niedrigstwertiger Bitperioden entspricht.

3. Verfahren nach Anspruch 1 oder Anspruch 2, bei dem die Abschnitte weiter in Gruppen aus Pixelelementen unterteilt werden, deren Daten dem räumlichen Lichtmodulator zu einem anderen Zeitpunkt als die anderer Pixelelemente zugeführt werden, wobei sie jedoch im wesentlichen während derselben Bildperiode angezeigt werden.

4. Verfahren nach einem der Ansprüche 1 bis 3, bei dem die N-Bit-Pixel-Daten zwei Gruppen umfassen, die aus höherwertigen bzw. niederwertigen Bits bestehen, jedes Bit aus jeder Gruppe eine entsprechende Bitgewichtung Bit($i_m$) bzw. Bit($i_l$) besitzt, wobei m=M,...,n-1 und l=0,...,M-1 gilt, jede der höherwertigen Bitgewichtungen unterteilt ist, so daß jede mehr als einen Abschnitt aufweist, der hier als Segment bezeichnet wird, und die Summe der Anzeigedauern aller Segmente der dem Abschnitt entsprechend der Bitgewichtung zugeteilten Anzeigedauer entspricht; und bei dem jede der niederwertigen Bitgewichtungen nicht unterteilt ist.

5. Verfahren nach einem der Ansprüche 1 bis 4, bei dem die minimale Anzeigedauer wenigstens einiger der Abschnitte durch die Anzahl an Malen bestimmt wird, daß diese Abschnitte während einer Bildperiode dem räumlichen Lichtmodulator zugeführt werden, geteilt durch die Anzahl dieser Abschnitte.

6. Verfahren nach Anspruch 4, bei dem die Anzeigedauern der Segmente im wesentlichen gleich lang sind.

7. Verfahren nach den Ansprüchen 4 und 5, bei dem die niederwertige Bitgruppe eine Gesamtanzeigedauer aufweist, die kürzer als die Anzeigedauer eines der Segmente ist.

8. Verfahren nach einem der Ansprüche 1 bis 7, bei dem die Abschnitte, die die niederwertige Gruppe repräsentieren, über die ganze Bildperiode angezeigt werden.

9. Verfahren nach einem der Ansprüche 1 bis 7, bei dem die Abschnitte, die die niederwertige Gruppe repräsentieren, während der Mitte der Bildperiode angezeigt werden.

**Revendications**

1. Procédé d'affichage de trames de données de pixels sur un modulateur spatial de lumière, chaque trame desdites données de pixels étant affichée dans une période de trame, ledit procédé comprenant les étapes consistant :

à formater lesdites données de pixels en parties, chaque dite partie correspondant à un poids binaire bit(i), où n-1≥i≥0, de la valeur d'intensité à afficher entre un bit le moins significatif bit(0) et un bit le plus significatif bit(n-1), lesdites parties étant représentées par des nombres correspondant à des longueurs d'affichage variant selon un motif non binaire,
à délivrer lesdites parties audit modulateur spatial de lumière,
à sommer lesdits nombres pour obtenir une valeur totale représentant une longueur d'affichage de trame,
à diviser la période de trame par au moins ladite valeur totale pour obtenir un certain nombre de tranches de temps égales, à régler le temps d'affichage pour la valeur la plus faible de l'intensité à afficher, c'est-à-dire la période des bits les moins significatifs, jusqu'à la durée d'une tranche de temps ainsi obtenue,
à multiplier ladite tranche de temps par un nombre correspondant à la longueur d'affichage de chaque dite partie pour déterminer le temps d'affichage de chaque dite partie sous la forme de son produit, et
à afficher lesdites parties de données de pixels pour chaque dite durée d'affichage.

2. Procédé selon la revendication 1, dans lequel le nombre de tranches de temps est sensiblement le même que le nombre de périodes des bits les moins significatifs.

3. Procédé selon la revendication 1 ou 2, dans lequel lesdites parties sont par ailleurs attribuées en groupes d'éléments de pixels dont les données doivent être délivrées audit modulateur spatial de lumière à un moment différent de celui d'autres éléments de pixels, mais affichées sensiblement au cours de la même période d'image.

4. Procédé selon les revendications 1 à 3, dans lequel lesdites données de pixels de n bits comprennent deux groupes constitués des bits les plus significatifs et des bits les moins significatifs, respectivement, chaque bit de chaque groupe ayant des poids binaires respectifs bit($i_m$), où m = M ... n-1, et bit($i_l$) où l = 0 ...M-1 et n-1 ≥M≥0, dans lequel chacun des poids binaires le plus significatifs est segmenté de telle sorte que chacun ait plus d'une desdites parties, dénommée par la suite segment, la somme des longueurs d'affichage de chaque segment étant égale à celle attribuée à la partie selon le poids binaire; et dans lequel chacun des poids binaires les moins significatifs reste non segmenté.

5. Procédé selon les revendications 1 à 4, dans lequel la longueur d'affichage minimale d'au moins certaines desdites parties est déterminée par le nombre de fois que ces parties sont délivrées audit modulateur spatial de lumière au cours d'une période d'image, divisé par le nombre de ces parties.

6. Procédé selon la revendication 4, dans lequel lesdits segments ont des longueurs d'affichage sensiblement égales.

7. Procédé selon les revendications 4 et 5, dans lequel ledit groupe de bits les moins significatifs a une longueur d'affichage totale inférieure à la longueur d'affichage de l'un desdits segments.

8. Procédé selon les revendications 1 à 7, dans lequel lesdites parties représentant ledit groupe le moins significatif sont affichées dans toute la période d'image.

9. Procédé selon les revendications 1 à 7, dans lequel lesdites parties représentant ledit groupe le moins significatif sont affichées à mi-période de trame.

*FIG. 1*

*FIG. 2*

FIG. 3

21 LSB
PERIODS EACH

20 LSB
PERIODS

21 LSB
PERIODS EACH

| 8 | 7 | 8 | 6 | 8 | 7 | 8 | 4-0 | 5 | 8 | 7 | 8 | 6 | 8 | 7 | 8 |

335 LSB
PERIODS

*FIG. 4*

21 LSB
PERIODS

21 LSB
PERIODS EACH

0   21 LSB
    PERIODS    1

21 LSB
PERIODS EACH

21 LSB
PERIODS EACH

21 LSB
PERIODS

| 8 | 3 | 7 | 8 | 6 | 8 | 7 | 8 | 5 | 8 | 7 | 8 | 2 | 6 | 8 | 7 | 4 | 8 |

335 LSB
PERIODS

*FIG. 5*